# EUROPÄISCHE PATENTANMELDUNG

(11) **EP 2 781 783 A1**
(43) Veröffentlichungstag der Anmeldung: **24.09.2014**
(21) Anmeldenummer: 13176880.6
(22) Anmeldetag: 17.07.2013
(51) Int. Cl.: F16D 55/224, F16D 121/02, F16D 121/14

(54) **Mobile Bremsvorrichtung**

(30) Priorität: 15.03.2013 DE 102013204596
(71) Anmelder: Siemens Aktiengesellschaft, 80333 München (DE)
(72) Erfinder: Niestegge, Jürgen, 46395 Bocholt (DE); Eidner, Karoline, 09322 Penig (DE)

(57) **Zusammenfassung**

Die Erfindung betrifft eine Mobile Bremsvorrichtung, umfassend eine Bremszange (62) mit mindestens einem Reibbelag (66) an einem Zangenkopf (65) der Bremszange (62) und einem Verstellelement (69), insbesondere einer Schraube oder einem hydraulischen Zylinder, an einem Zangengriff (67) der Bremszange (62), wobei die Reibfläche (66) durch eine Verstellung des Verstellelements (69) bewegbar ist, und eine Befestigungsvorrichtung (61), insbesondere eine Konsole, zum lösbaren Befestigen der Bremszange (62) an einer Antriebskomponente (51). Die mobile Bremsvorrichtung (6) wird zum Bremsen und Halten einer Welle (521, 531) einer Antriebskomponente (5) verwendet, wobei zunächst die mobile Bremsvorrichtung (6) mittels der Befestigungsvorrichtung (61) an einem relativ zu der Welle (521, 531) feststehenden Bauteil (56) der Antriebskomponente (51) lösbar befestigt wird, so dass der Reibbelag (66) auf einer Seite einer drehfest mit einer Welle (521, 531) der Antriebskomponente (5) verbundenen Bremsscheibe (54) positioniert ist; dann das Verstellelement (69) so verstellt wird, dass der Reibbelag (66) gegen die Bremsscheibe (54) gepresst wird; die Bremsscheibe und die damit verbundene Welle für eine bestimmte Zeitdauer mittels der Bremszange (62) gegen eine Drehung gehalten werden; daraufhin das Verstellelement (69) so verstellt wird, dass sich der Reibbelag (66) wieder von die Bremsscheibe (54) löst; und zuletzt die mobile Bremsvorrichtung (6) wieder von der Antriebskomponente (51) demontiert wird.

## Beschreibung

Die Erfindung betrifft eine mobile Bremsvorrichtung.

EP 2 410 197 A1 (HANSEN INDUSTRIAL TRANSMISSIONS) 25.01.2012 beschreibt ein Bremssystem für ein Industriegetriebe. Das Bremssystem umfasst zwei hydraulische Bremszylinder, die an einer Laterne des Getriebes montierbar sind. Dabei wird eine in der Laterne angeordnete Kupplung als Bremskörper genutzt, wobei von den Bremszylindern bewegte Bremsschuhe gegen Kupplungspakete der Kupplung gepresst werden. Ein Nachteil dieses Bremssystems ist, dass das damit erreichbare Bremsmoment relativ klein ist und die Kupplungspakete thermisch überlastet werden können.

Es ist Aufgabe der vorliegenden Erfindung, ein verbessertes Bremsverfahren für eine Antriebskomponente bereitzustellen.

Die Aufgabe wird gelöst durch eine mobile Bremsvorrichtung nach Anspruch 1. Die Aufgabe wird ferner gelöst durch eine Verwendung nach Anspruch 6. Bevorzugte Weiterbildungen der Erfindung sind in den abhängigen Ansprüchen beschrieben.

Die erfindungsgemäße mobile Bremsvorrichtung umfasst eine Bremszange mit mindestens einem Reibbelag an einem Zangenkopf der Bremszange und einem Verstellelement, insbesondere einer Schraube oder einem hydraulischen Zylinder, an einem Zangengriff der Bremszange, wobei die Reibfläche durch eine Verstellung des Verstellelements bewegbar ist, und eine Befestigungsvorrichtung, insbesondere eine Konsole, zum lösbaren Befestigen der Bremszange an einer Antriebskomponente. Die erfindungsgemäße Verwendung einer mobilen Bremsvorrichtung zum Bremsen und Halten einer Welle einer Antriebskomponente umfasst: zunächst wird die mobile Bremsvorrichtung mittels der Befestigungsvorrichtung an einem relativ zu der Welle feststehenden Bauteil der Antriebskomponente lösbar befestigt, so dass der Reibbelag auf einer Seite einer drehfest mit einer Welle der Antriebskomponente verbundenen Bremsscheibe positioniert ist; dann wird das Verstellelement so verstellt, dass der Reibbelag gegen die Bremsscheibe gepresst wird; die Bremsscheibe und die damit verbundene Welle wird für eine bestimmte Zeitdauer mittels der Bremszange gegen eine Drehung gehalten; daraufhin wird das Verstellelement so verstellt, dass sich der Reibbelag wieder von die Bremsscheibe löst; und zuletzt wird die mobile Bremsvorrichtung wieder von der Antriebskomponente demontiert.

Die vorliegende Bremsvorrichtung stellt eine besonders kostengünstige und robuste Lösung dar, da sie mechanisch sehr einfach aufgebaut ist. Außerdem ist unabhängig von der Anzahl der abzubremsenden Antriebskomponenten eine einzige Bremsvorrichtung ausreichend: für Wartungsarbeiten an einer Mehrzahl von Antriebskomponenten wird die Bremsvorrichtung nacheinander an je einer Antriebskomponente montiert, diese Antriebskomponente abgebremst und gehalten, und nach Abschluss der Wartung dieser abgebremsten Antriebskomponente die Bremsvorrichtung wieder demontiert. Danach werden diese Schritte an der nächsten Antriebskomponente wiederholt.

Unter "Antriebskomponente" wird jede Komponente eines Antriebstrangs verstanden. Eine Antriebskomponente kann z.B. ein Motor, insbesondere ein Elektromotor, ein Getriebe, ein Getriebemotor, allgemein jede Komponente mit einer rotierenden Welle sein.

Eine bevorzugte Anwendung der Bremse ist auf dem technischen Gebiet von Luft-Kondensatoren, kurz "Luko" genannt. Die vorliegende Bremsvorrichtung wird vorteilhafterweise bei Luft-Kondensator-Anlagen mit mehreren Lüftern eingesetzt. Luft-Kondensatoren werden zur Kühlung von Kühlmitteln verwendet, welche z.B. zur Wärmeabfuhr von Turbinen in Kraftwerken dienen. Eine Luko-Anlage kann aus bis zu circa einhundert Zellen bestehen, welche oftmals schachbrettförmig angeordnet sind. Jede Zelle ist bestückt mit einem Antrieb, z.B. einem Getriebemotor oder einer Motor/Kupplung/Getriebe-Einheit, zum Antrieb eines Lüfters (Ventilator). Durch den Lüfter wird Luft von unten angesaugt und dann durch einen oberhalb des Lüfters angeordneten Wärmetauscher geblasen, wodurch ein Kühleffekt eintritt. Aufgrund von Wärme in den Wärmetauschern kann es durch entstehende Thermik zu einem natürlichen Windstrom in der Anlage (Luft-Kondensatoren) kommen. Hierdurch entsteht ein sogenanntes "windmilling", d.h. der Lüfter dreht sich selbsttätig, obwohl der zum Antreiben des Lüfters vorgesehene Antrieb abgeschaltet ist. Für Wartungsarbeiten ist es in einem solchen Fall erforderlich, diese selbsttätig auftretende Rotation des Lüfterrads anzuhalten.

Bislang wurden Lüfter in der Praxis oftmals mittels eines Lassos eingefangen; unter dem Aspekt der Arbeitssicherheit stellt dies aber eine unzureichende Lösung dar. Betreiber von Luko-Anlagen fordern eine kostengünstige Lösung, mit der man in der Lage ist, ein sich drehenden Lüfter sicher abzubremsen und zu halten, um eine Wartung an dem Lüfterrad vornehmen zu können. Die Erfindung bietet dafür eine mobile Bremse, welche es unter Einhaltung hoher Sicherheitsstandards ermöglicht, während des Betriebs der gesamten Luko-Anlage jeweils einen Lüfter zum Stillstand zu bringen und zu fixieren. Ein Vorteil der erfindungsgemäßen mobilen Bremsvorrichtung ist somit, dass sie während des Betriebs einer Antriebsanlage, d.h. bei rotierenden Antriebskomponenten, gefahrlos zu installieren ist. Somit erhöht sich die Sicherheit.

Da eine Luko-Anlage in der Regel mehrere Antriebe mit jeweils mindestens einem Antriebsstrang umfasst, ist der Vorteil einer mobilen Bremse, dass man für alle Antriebe nur eine mobile Bremse benötigt. Bei einer fest angebauten Bremse müsste jede Bremse sicherheitstechnisch mit einem Näherungsschalter versehen werden, um ein Anfahren gegen die Bremse auszuschließen. Dies wäre neben den erhöhten Kosten für die eigentliche Bremse auch noch mit zusätzlichen Kosten für die zusätzliche elektrische Ausstattung und Verdrahtung verbunden. Die erfindungsgemäße mobile Bremse hingegen wird nur im Wartungsfall angebaut.

Die mobile Bremse kann einerseits mittels Handrad betätigt werden, d.h., der Bremsvorgang wird mechanisch durch das Drehen des Handrades über einen Gewindebolzen aktiviert. Alternativ kann ein mobiles hydraulisches System, z.B. eine Druckzylinder, zur Verstellung der Bremsbacken vorgesehen sein.

Es ist möglich, dass die Reibbeläge am Zangenkopf schwenkbar gelagert sind; auf diese Weise kann sich die Reibfläche der Reibbeläge beim Bremsvorgang optimal vollflächig an die Bremsscheibe anlegen. Dies gewährleistet auch dann einen sicheren Bremsvorgang, wenn die Bremszange aufgrund von Toleranzen nicht mittig zur Bremsscheibe positioniert ist. Es ist möglich, dass die schwenkbar gelagerten Reibbeläge durch eine Rückholfeder in einer Ausgangsposition gehalten werden. Die Rückholfeder erlaubt ein Verschwenken der Reibbeläge aus der Ausgangsposition, sorgt aber dafür, dass nach dem Bremsvorgang beim Lösen der Bremszange die Bremsbeläge wieder in die berührungslose Ausgangsposition zurück schwenken.

Gemäß einer bevorzugten Weiterbildung der Erfindung ist die Bremsvorrichtung zur mobilen, d.h. lösbaren, Befestigung an einer Laterne, z.B. Motorlaterne, eines Getriebes bzw. Getriebemotors geeignet. Dies kann mithilfe von Gewindebolzen erfolgen, die an der Laterne befestigt sind und durch Durchgangsbohrungen in der Befestigungsvorrichtung geführt werden oder durch Bolzen, die fest an der Bremsvorrichtung montiert sind und in Durchgangsbohrungen in der Laterne eingeführt werden.

Nach dem Einführen wird die Bremsvorrichtung mittels Schrauben für die Zeit des Anbaues fest mit der Laterne verbunden.

Gemäß einer bevorzugten Weiterbildung der Erfindung ist die Befestigungsvorrichtung eine Bremskonsole, die Durchgangsbohrungen zur Aufnahme von Führungsbolzen oder fest montierte Führungsbolzen zur Aufnahme in die Durchgangslöcher der Laterne aufweist und eine Öffnung zum Anbau der Bremszange aufweist. Die Öffnung kann je nach Position der verbauten Bremsscheibe und Anordnung der Laterne im mittleren Bereich der Bremskonsole angeordnet sein. Ein zweiter Abschnitt der Bremszange, umfassend die Bremsbeläge, ragt vorzugsweise durch die Öffnung hindurch zu einer Bremsscheibe, während ein erster Abschnitt mit dem Verstellelement vor der Öffnung positioniert ist. Vorzugsweise weist die Bremskonsole vier quadratisch oder rechteckig angeordnete Bohrungen oder Bolzen zur Aufnahme von Bolzen oder Durchgangslöcher auf.

Eine bevorzugte Weiterbildung der Erfindung ist eine Antriebskomponente, insbesondere ein Getriebe/ Getriebemotor, mit einer mobilen Bremsvorrichtung wie oben beschrieben, wobei die Bremsvorrichtung an der Antriebskomponente lösbar fixiert ist und die Reibflächen der beiden Bremsbeläge bei einer Betätigung der Verstellvorrichtung auf eine Bremsscheibe der Antriebskomponente gepresst werden. Dabei ist die Bremsscheibe drehfest mit einer Welle oder einer Kupplung des Getriebes verbunden.

Die Bremskonsole kann Langlöcher aufweisen, so dass die Position der Bremszange in axialer Richtung der Bremsscheibe verstellt werden kann.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Bremszange einer Bremsvorrichtung;
- Fig. 2: eine Bremskonsole;
- Fig. 3: einen Schnitt einer Antriebseinheit und einer mobilen Bremsvorrichtung;
- Fig. 4: eine Bremsvorrichtung im Schnitt.
- Fig. 5: eine Motorlaterne;
- Fig. 6: eine mobile Bremsvorrichtung;
- Fig. 7: ein erstes Ausführungsprinzip einer Bremszange;
- Fig. 8: eine weiteres Ausführungsprinzip einer Bremszange; und
- Fig. 9: einen Schnitt durch einen Luft-Kondensator (LUKO).

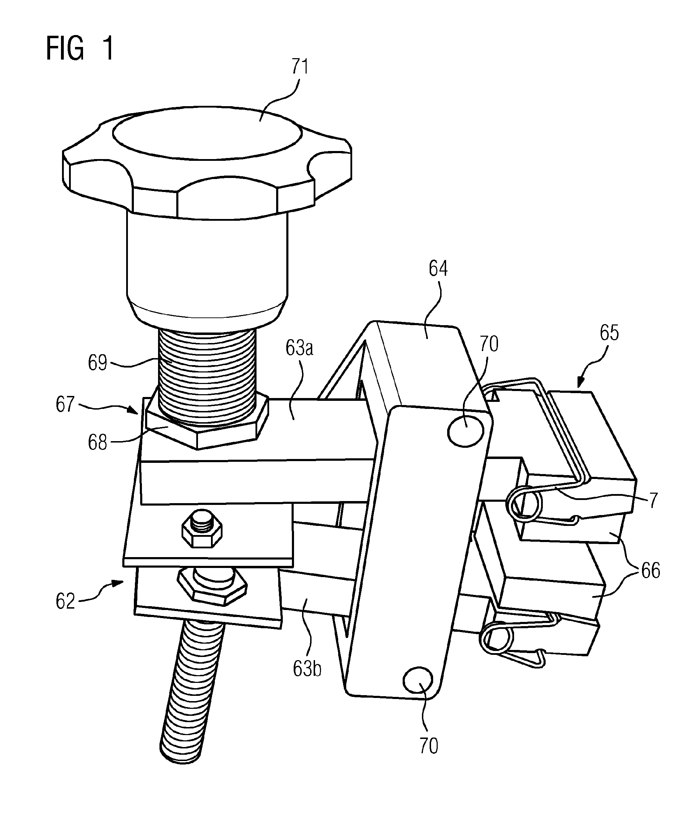

Fig. 1 zeigt eine Bremszange 62 einer Bremsvorrichtung 6. Die Zange 62 umfasst zwei Schenkel 63a und 63b, die so in einem Rahmen 64 gelenkig gelagert sind, dass das Gelenk die Schenkel 63 jeweils in einen längeren, ersten Abschnitt und einen kürzeren, zweiten Abschnitt unterteilt. Am Zangenkopf 65, d.h. am Ende des zweiten Abschnitts der Schenkel 63, sind auf den zueinander weisenden Innenflächen der Schenkel 63 Reibflächen 66 angeordnet. Am Zangengriff 67, d.h. am Ende des ersten Abschnitts der Schenkel 63, ist ein Gewinde 68 in einem ersten Schenkel 63a angeordnet, wobei die Gewindeachse senkrecht zur Längsrichtung des Schenkels 63a verläuft. In das Gewinde 68 ist eine Schraube 69 eingedreht. Der Schraubenkopf weist einen Drehknopf(Handrad) 71 auf, der ein manuelles Drehen der Schraube 69 erleichtert. Das entgegengesetzte Ende der Schraube 69 liegt an der Innenfläche des zweiten Schenkels 63b an. Durch ein Eindrehen der Schraube 69 in das Gewinde 68 bewegen sich die Schenkel 63 am Zangengriff voneinander weg, während sich die Schenkel 63 am Zangenkopf, und somit die Reibflächen 66, in einer Zangenbewegung aufeinander zu bewegen.

Der Rahmen 64 weist sich quer zur Längsrichtung der Schenkel 63 erstreckende Durchgangsbohrungen 70 zur Aufnahme von Schraubbolzen auf, mittels derer die Bremszange 62 an einem Flansch montiert werden kann.

Die Reibbeläge 66 am Zangenkopf sind schwenkbar gelagert; auf diese Weise kann sich beim Bremsvorgang die Winkelstellung der Reibbeläge an die Ebene der Bremsscheibe anpassen. Dies gewährleistet auch dann eine vollflächige Anlage der Bremsbeläge an der Bremsscheibe, falls die Bremszange nicht mittig zur Bremsscheibe positioniert ist. Die Reibbeläge 66 werden durch je eine Bügelfeder (Rückholfeder) 7 in einer Ausgangsposition gehalten. Die Federn erlauben aber ein Verschwenken der Beläge 66 aus dieser Ausgangsposition. Nach dem Lösen der Bremsbeläge 66 von der Bremsscheibe 54 schwenken die Bremsbeläge 66, aufgrund der Federkraft der Federn 7, immer wieder in die Ausgangsposition zurück. Dadurch wird ein ungewolltes Schleifen der Bremsbeläge 66 an der Bremsscheibe 54 verhindert.

Die maximale Öffnung der Zange am Zangengriff kann z.B. im Bereich von 20 bis 30 mm liegen. Die maximale Öffnung der Zange am Zangenkopf, d.h. die lichte Weite zwischen den Bremsbelägen, kann z.B. im Bereich von 15 bis 30 mm liegen. Eine typische Bremsscheibe hat eine Dicke von 12 bis 13 mm. Somit ist für eine Montage der Bremszange unter Berücksichtigung aller Toleranzen ausreichend Raum vorhanden.

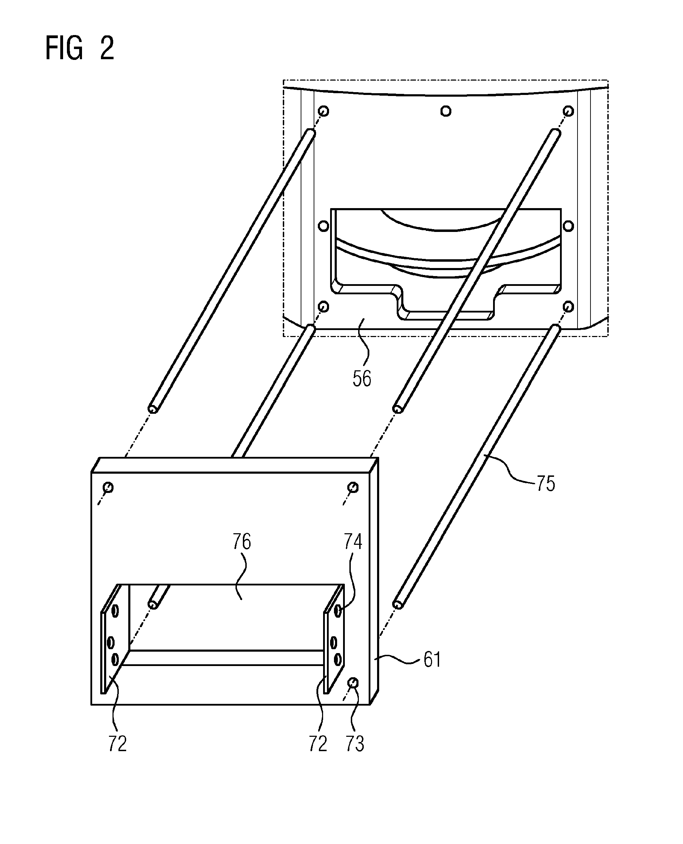

Fig. 2 zeigt im linken Teil der Zeichnung eine rechteckige Bremskonsole 61, in deren Eckbereichen Durchgangsbohrungen 73 angeordnet sind. Diese sind zur Aufnahme von Gewindebolzen 75 vorgesehen, die seitlich einer Aussparung am Laternengehäuse 56 eingeschraubt sind, wie im rechten Teil der Zeichnung dargestellt. Die Bremskonsole61 weist in einem zentralen Bereich eine durchgehende Aussparung 76 auf, durch welche die Bremszange 62 geführt werden kann. Zur Befestigung der Bremszange 62 an dem Flansch 61 sind an zwei gegenüberliegenden Kanten der Aussparung 76 Laschen 72 mit Durchgangsbohrungen 74 vorgesehen.

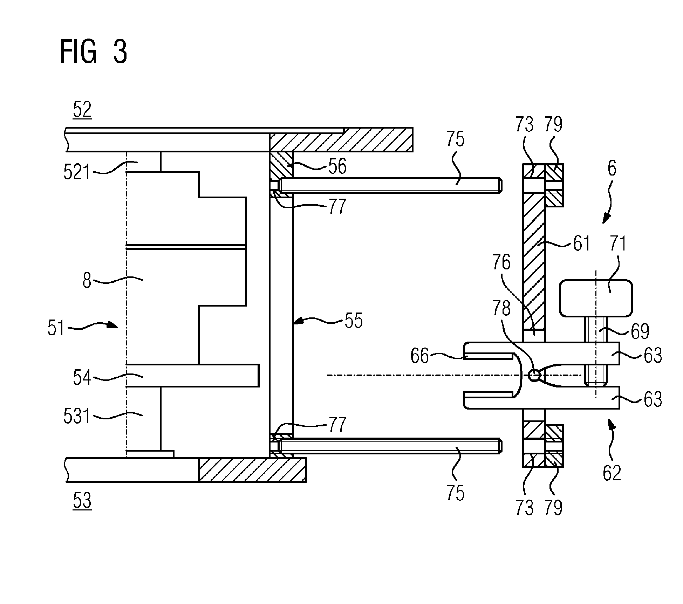

Fig. 3 veranschaulicht die Montage einer mobilen Bremsvorrichtung 6 anhand einer Schnittzeichnung. Im linken Teil der Zeichnung ist eine Antriebseinheit bestehend aus einem Elektromotor 52, einer Kupplung mit einer Bremsscheibe 54 und einem Getriebe 53 dargestellt. Eine Ausgangswelle 521 des Motors 52 und eine Eingangswelle 531 des Getriebes 53 sind durch eine Kupplung 8, z.B. eine Klauenkupplung, drehfest miteinander verbunden. An der Eingangswelle 531 des Getriebes 53 ist zusätzlich eine Bremsscheibe 54 angeordnet, die zum Abbremsen und Sichern gegen eine Drehung der Antriebsvorrichtung dient. Die Kupplung 8 und die Bremsscheibe 54 befinden sich innerhalb einer Laterne 51, welche zwischen dem Motor 52 und dem Getriebe 53 angeordnet ist. Die Motorlaterne 51 weist ein oder zwei Öffnungen 55 auf, durch welche die Kupplung und die Bremsscheibe 54 zu Wartungszwecken zugänglich sind. Im Betrieb ist diese Öffnung 55 mit einem nicht dargestellten Deckel, z.B. in Form eines Abdeckblechs, verschlossen.

Im rechten Teil der Zeichnung ist eine mobile Bremsvorrichtung 6 mit einer Bremszange 62 und einer Bremskonsole 61 dargestellt. Die Bremszange umfasst zwei gegeneinander schwenkbare Schenkel 63, an deren kürzerem Endanschnitt Bremsbeläge 66 angebracht sind. An dem längeren Endabschnitt der Schenkel 63 ist eine Schraubverstell-Vorrichtung angeordnet, wobei mittels einer Drehung einer mit einem Drehgriff/Handrad 71 versehenen Schraube 69 eine Zangenbewegung der kürzeren Endabschnitte der Schenkel 63 hervorgerufen werden kann, so dass die Reibbeläge 66 zueinander bewegt werden. Die Bremszange ist in einer Öffnung der Bremskonsole 61 so angeordnet, dass die längeren Endabschnitte der Schenkel 63 auf einer ersten Seite der Bremskonsole 61, die kürzeren Endabschnitte der Schenkel 63 auf einer zweiten Seite der Bremskonsole 61, und das Gelenk 78 der Bremszange in der Ebene des Flansches 61 liegt. In den Eckbereichen der Bremskonsole 61 sind Durchgangsbohrungen 73 angeordnet.

Zur Montage der mobilen Bremsvorrichtung 6 wird zunächst der die Wartungsöffnung 55 verschließende Wartungsdeckel entfernt, indem den Deckel haltende Schrauben aus entsprechenden, im Laternenmantel 56 vorgesehenen Gewindebohrungen 77 heraus geschraubt werden. In diese frei gewordenen Gewindebohrungen 77 werden nun Gewindestangen 75, z.B. in Form von Stehbolzen, eingeschraubt. Die Bremskonsole 61 wird über den Gewindestangen 75 in Position gebracht, indem die Durchgangsbohrungen 73 der Bremskonsole 61 auf die Gewindestangen 75 geschoben werden. Dabei wird sichergestellt, dass die Bremsscheibe 54 zwischen den Reibbelägen 66 angeordnet ist. Die Bremskonsole 61 wird danach durch Anziehen von Muttern 79 auf den Gewindestangen 75 an der Laterne 51 fixiert.

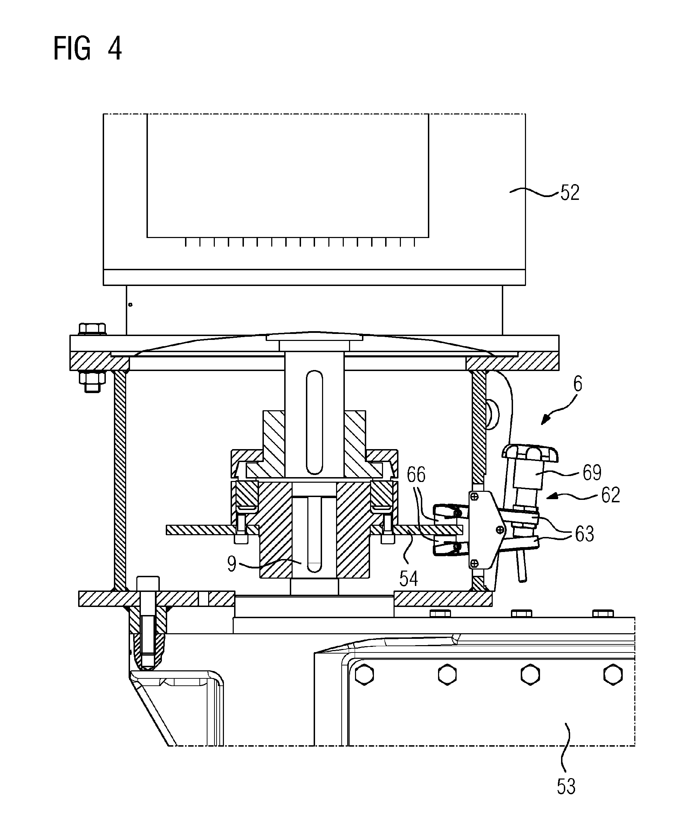

Fig. 4 zeigt die sich auf diese Weise ergebende Position der Bremsvorrichtung 6 im Schnitt. Die Reibbeläge 66 der Bremszange 62 sind so an beiden Seiten der Bremsscheibe 54 angeordnet, dass ein weiteres Eindrehen der Schraube 69 zu einem Andrücken der Reibbeläge 66 an der Bremsscheibe 54 und somit zu einem Abbremsen der Bremsscheibe 54 und der drehfest mit der Bremsscheibe 54 verbundenen Welle 9 führt. Somit kann mittels der mobilen Bremsvorrichtung 6 die Antriebsvorrichtung bestehend aus Motor und Getriebe abgebremst und fest gehalten werden.

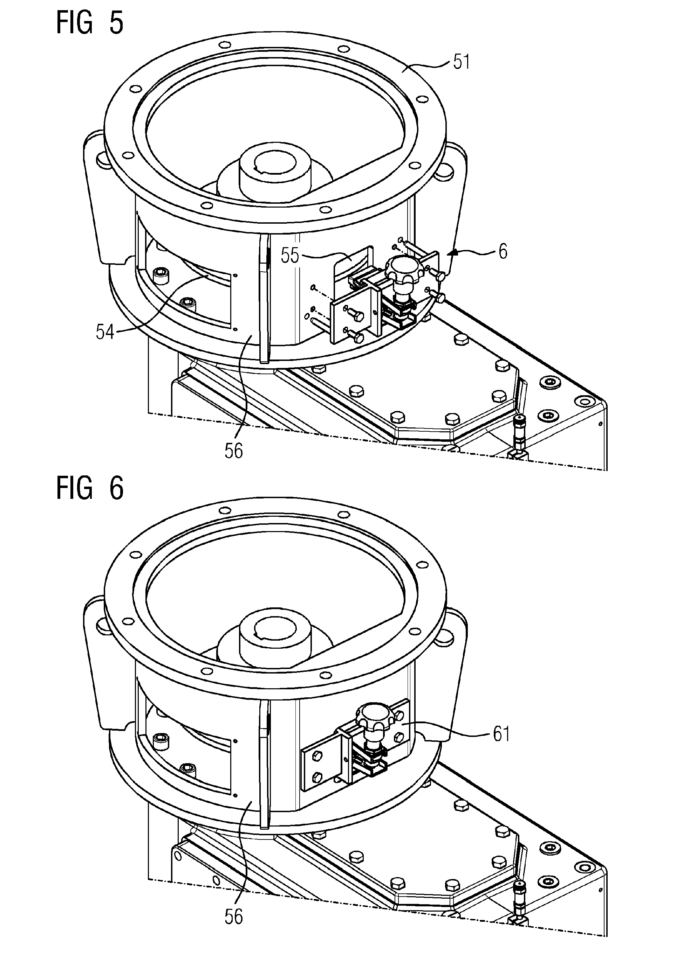

Fig. 5 zeigt eine Laterne 51, die zwischen einem Elektromotor 52 und einem Getriebe 53 angeordnet ist. In der Laterne 51 ist eine Bremsscheibe 54 angeordnet, die drehfest mit der Eingangswelle des Getriebes verbunden ist. Durch eine Öffnung 55 in einer Mantelfläche 56 der Laterne 51 ist eine Bremsvorrichtung 6 teilweise in das Innere der Laterne 51 einführbar.

Fig. 6 zeigt die Bremsvorrichtung 6, die mittels einer Bremskonsole 61 an einer Öffnung bzw. Aussparung des Laternengehäuses 56 fixierbar ist. Im montierten Zustand der Bremsvorrichtung 6 befindet sich ein erster Abschnitt der Bremsvorrichtung 6 außerhalb des Laternengehäuses 56 der Laterne 51 und ist von außen bedienbar, während ein zweiter Abschnitt der Bremsvorrichtung 6 innerhalb des Laternengehäuses 56 der Laterne 51 angeordnet ist.

Der zweite Abschnitt der Bremsvorrichtung 6 umfasst zwei Reibflächen 66, welche gegen beide Seiten der Bremsscheibe 54 gepresst werden, wenn ein Handrad 69, die sich im ersten Abschnitt der Bremsvorrichtung 6 befindet, gedreht wird.

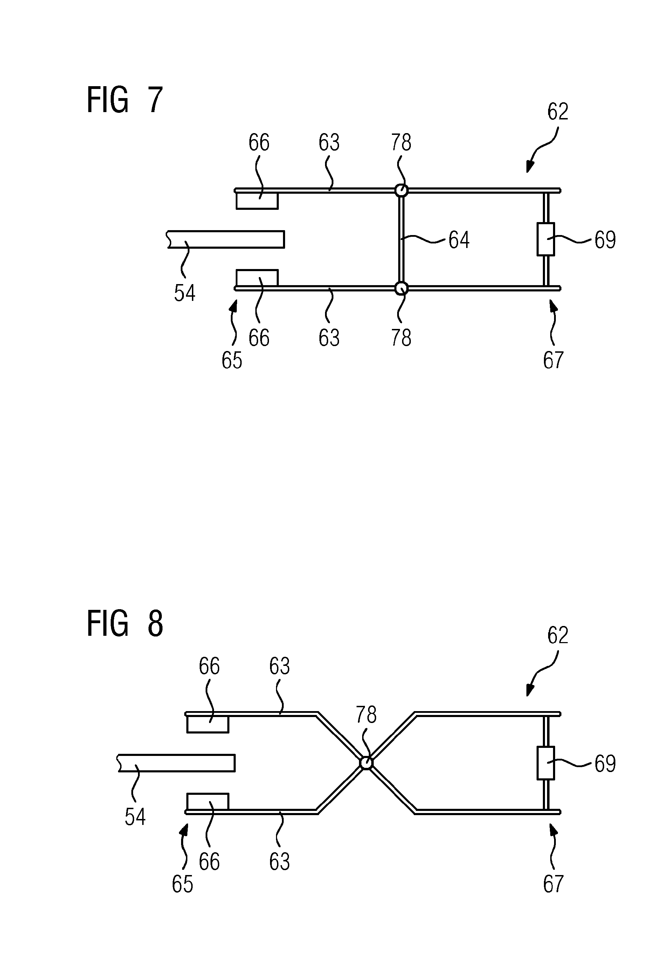

Fig. 7 zeigt ein erstes Wirkprinzip einer Bremszange 62, bei dem die Schenkel 63 über je ein Gelenk 78 an einem Rahmen 64 drehbar gelagert sind. Ein Öffnen des Zangengriffs 67 durch ein Verstellelement 69 bewirkt ein Schließen des Zangenkopfs 65 und somit eine Bewegung von am Zangenkopf 65 angeordneten Reibflächen 66 aufeinander zu und in Folge zu einer beidseitigen gleichmäßigen Beaufschlagung einer zwischen den Bremsbelägen 66 positionierten Bremsscheibe 54 mit Bremskräften.

Fig. 8 zeigt ein zweites Wirkprinzip einer Bremszange 62, bei dem die Schenkel 63 über ein Gelenk 78 drehbar gelagert sind. Ein Schließen des Zangengriffs 67 durch ein Verstellelement 69 bewirkt ein Schließen des Zangenkopfs 65 und somit eine Bewegung von am Zangenkopf 65 angeordneten Reibflächen 66 aufeinander zu und in Folge zu einer beidseitigen gleichmäßigen Beaufschlagung einer zwischen den Bremsbelägen 66 positionierten Bremsscheibe 54 mit Bremskräften.

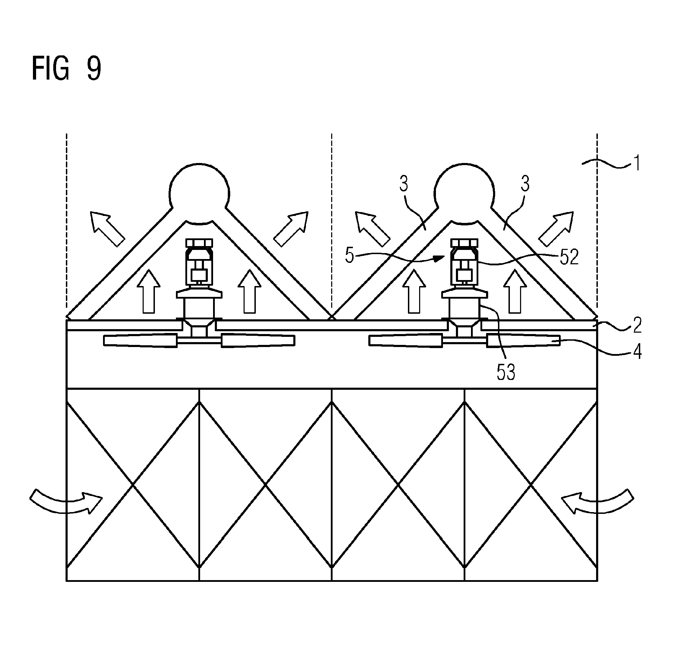

Fig. 9 zeigt einen vertikalen Schnitt durch eine Lüfteranlage mit einer Lüfterzelle 1. Über einer Montagebrücke 2 sind dachförmig Wärmetauscher 3 angeordnet, die von unten vertikal nach oben mit Luft durchströmt werden, welche mittels eines Lüfters 4 angesaugt wird. Der Lüfter 4 wird von einer Motor-Getriebe-Kombination oder einem Getriebemotor 5 angetrieben, der einen Elektromotor 52 und ein Getriebe 53 umfasst. An einer Position zwischen dem Motor 52 und dem Getriebe 53 kann eine mobile Bremsvorrichtung angeflanscht werden.

## Patentansprüche

1. Mobile Bremsvorrichtung (6), umfassend
- eine Bremszange (62) mit mindestens einem Reibbelag (66) an einem Zangenkopf (65) der Bremszange (62) und einem Verstellelement (69), insbesondere einer Schraube oder einem hydraulischen Zylinder, an einem Zangengriff (67) der Bremszange (62), wobei die Reibfläche (66) durch eine Verstellung des Verstellelements (69) bewegbar ist, und
- eine Befestigungsvorrichtung (61), insbesondere eine Konsole, zum lösbaren Befestigen der Bremszange (62) an einer Antriebskomponente (51).

2. Bremsvorrichtung (6) nach Anspruch 1, wobei die Befestigungsvorrichtung (6) zur lösbaren Befestigung an einer Laterne (51) eines Getriebemotors (5) geeignet ist.

3. Bremsvorrichtung (6) nach Anspruch 1 oder 2, wobei die Befestigungsvorrichtung (6) eine deckelförmige Konsole (61) ist, die Durchgangsbohrungen (73) zur Aufnahme von Bolzen (75) und eine Öffnung (76) zum Einführen der Bremszange (62) aufweist.

4. Bremsvorrichtung (6) nach einem der vorhergehenden Ansprüche, wobei der Zangenkopf (65) der Bremszange (62) mindestens zwei sich gegenüber stehende Reibbeläge (66) aufweist, welche durch eine Verstellung des Verstellelements (69) gegeneinander bewegbar sind.

5. Antriebskomponente (5), insbesondere Getriebe oder Getriebemotor, mit einer mobilen Bremsvorrichtung (6) nach einem der Ansprüche 1 bis 4, wobei die Bremsvorrichtung (6) an der Antriebskomponente (5) lösbar fixiert ist und der Reibbelag (66) bei einer Betätigung des Verstellelements (69) gegen eine Bremsscheibe (54) der Antriebskomponente (5) pressbar ist, welche drehfest mit einer Welle (521, 531) der Antriebskomponente (5) verbunden ist.

6. Verwendung einer mobilen Bremsvorrichtung (6) nach einem der Ansprüche 1 bis 4 zum Bremsen und Halten einer Welle (521, 531) einer Antriebskomponente (5), wobei
- zunächst die mobile Bremsvorrichtung (6) mittels der Befestigungsvorrichtung (61) an einem relativ zu der Welle (521, 531) feststehenden Bauteil (56) der Antriebskomponente (51) lösbar befestigt wird, so dass der Reibbelag (66) auf einer Seite einer drehfest mit einer Welle (521, 531) der Antriebskomponente (5) verbundenen Bremsscheibe (54) positioniert ist;
- dann das Verstellelement (69) so verstellt wird, dass der Reibbelag (66) gegen die Bremsscheibe (54) gepresst wird;
- die Bremsscheibe und die damit verbundene Welle für eine bestimmte Zeitdauer mittels der Bremszange (62) gegen eine Drehung gehalten werden;
- daraufhin das Verstellelement (69) so verstellt wird, dass sich der Reibbelag (66) wieder von die Bremsscheibe (54) löst; und
- zuletzt die mobile Bremsvorrichtung (6) mittels der Befestigungsvorrichtung (61) wieder von der Antriebskomponente (51) demontiert wird.

7. Verwendung nach Anspruch 6, wobei die Antriebskomponente (5) ein Lüfter (4) eines Luft-Kondensators ist.
